# FASCICULE DE BREVET EUROPEEN

(11) **EP 0 632 373 B1**
(45) Date de publication et mention de la délivrance du brevet: **02.06.1999**
(21) Numéro de dépôt: 94401447.1
(22) Date de dépôt: 27.06.1994
(51) Int. Cl.: G06F 9/445

(54) **Système de téléchargement de données de programme pour calculateur de gestion de processus**
System für Fernladung von Programmdaten für einen Prozessverwaltungsrechner
System for downloading program data into a process controller

(30) Priorité: 30.06.1993 FR 9307997
(43) Date de publication de la demande: 04.01.1995
(73) Titulaire: MAGNETI MARELLI FRANCE, F-92000 Nanterre (FR)
(72) Inventeur: Dunez, Olivier, F-78500 Sartrouville (FR)
(74) Mandataire: Fréchède, Michel

(56) Documents cités:
- EP-A- 0 464 433
- ELECTRONIC ENGINEERING vol. 64, no. 783 , Mars 1992 , LONDON, GB pages 83 - 85

## Description

L'invention concerne un système de téléchargement de données de programme pour calculateur de gestion de processus.

Les dispositifs tels que les véhicules automobiles modernes voient de plus en plus fréquemment l'ensemble de leurs fonctions essentielles soumises au contrôle d'un calculateur de gestion, constitué habituellement par un microprocesseur ou un microcontrôleur.

L'ensemble des fonctions gérées peut comprendre tant les fonctions relatives à la marche et à la sécurité du dispositif ou du véhicule que celles relatives au groupe propulseur dans le cas d'un véhicule, ces dernières fonctions faisant intervenir un nombre important de paramètres physiques, permettant une optimalisation du fonctionnement du groupe propulseur ou du dispositif.

D'une manière générale, le calculateur de gestion comprend un microcontrôleur auquel sont associées une mémoire de travail, de type mémoire vive, et une mémoire de programme de type mémoire morte, dans laquelle sont mémorisées les données de programme correspondantes.

Avec le caractère évolutif et le caractère de diversité croissants tant des groupes propulseurs que des modèles de véhicules ou de dispositifs utilisant ces derniers, le problème de l'évolution correspondante de ce type de calculateur se pose non seulement au niveau de la construction de ces véhicules ou dispositifs, mais également de leur maintenance et de leur suivi technique.

En particulier, il est fréquemment nécessaire de prévoir une mémoire morte programmée dédiée pour chaque type de véhicule ou de dispositif. Une telle contrainte s'accomode mal des impératifs de souplesse tant du point de vue de la fabrication que de la maintenance de ces derniers, afin notamment de réduire les coûts de mise en oeuvre correspondants.

Le document EP-A-0 464 433 décrit un micro-contrôleur comprenant une mémoire de type EPROM programmable par téléchargement à partir d'un ordinateur hôte, ainsi qu'un algorithme de programmation interactive de cette mémoire.

La présente invention a pour objet de remédier aux inconvénients précités par la mise en oeuvre d'un système de téléchargement de programme pour calculateur de gestion de processus de fonctionnement d'un dispositif tel qu'un véhicule automobile, par exemple.

Un autre objet de la présente invention est la mise en oeuvre d'un système de téléchargement de programme pour calculateur de gestion de processus permettant d'effectuer le téléchargement précité de données de programme quelconques, c'est-à-dire correspondant à des modèles les plus divers, sur un seul et même type de calculateur de gestion, ce qui permet de fonctionnaliser et de particulariser ces dispositifs lors de ce chargement.

Un autre objet de la présente invention est la mise en oeuvre d'un système de téléchargement de programme pour calculateur de gestion de processus permettant, du fait même du téléchargement, selon un protocole de chargement spécifique, d'effectuer un contrôle centralisé des données de programme téléchargées, ce qui permet d'accroître la sécurité et l'intégrité des données de programme téléchargées, et, en définitive, la fiabilité de l'ensemble du véhicule ou du dispositif.

La présente invention concerne un système de téléchargement de données de programme sur un site de réception de ces données comportant un calculateur de gestion de processus, à partir d'un central serveur selon la revendication 1. Ce système de téléchargement est remarquable en ce qu'il comporte un circuit de réception d'un signal analogique externe de commande d'amorçage du processus de téléchargement et un circuit de validation du processus de téléchargement, sur réception du signal analogique externe de commande d'amorçage du processus de téléchargement. Un circuit de mémorisation -des données de programme est prévu pour assurer cette mémorisation suite à la validation du processus de téléchargement.

Le système de téléchargement de données de programme sur un site de réception de ces données comportant un calculateur de gestion de processus, objet de l'invention, trouve application à la construction et à la maintenance de dispositifs tels que des véhicules automobiles, véhicules de transport ou particuliers, de série ou de compétition, véhicules terrestres, aériens ou autres.

Une description plus détaillée du système de téléchargement de données de programme objet de la présente invention sera donnée ci-après en relation avec les dessins dans lesquels :
- la figure 1a représente un schéma synoptique d'un système de téléchargement de données de programme objet de la présente invention,
- la figure 1b représente un chronogramme d'un signal ou message de validation d'amorçage du processus de téléchargement,
- la figure 2a représente un mode de réalisation avantageux du système de téléchargement de données de programme selon l'invention au moyen d'un micro-contrôleur,
- la figure 2b représente un organigramme de fonctionnement du système de téléchargement représenté en figure 2a,
- la figure 2c représente un protocole de téléchargement des données de programme utilisable avec le système représenté en figure 2a,
- la figure 3a représente une variante de réalisation du système selon l'invention tel que représenté en figure 2a,
- la figure 3b représente un organigramme de fonctionnement du système selon l'invention tel que représenté en figure 3a.

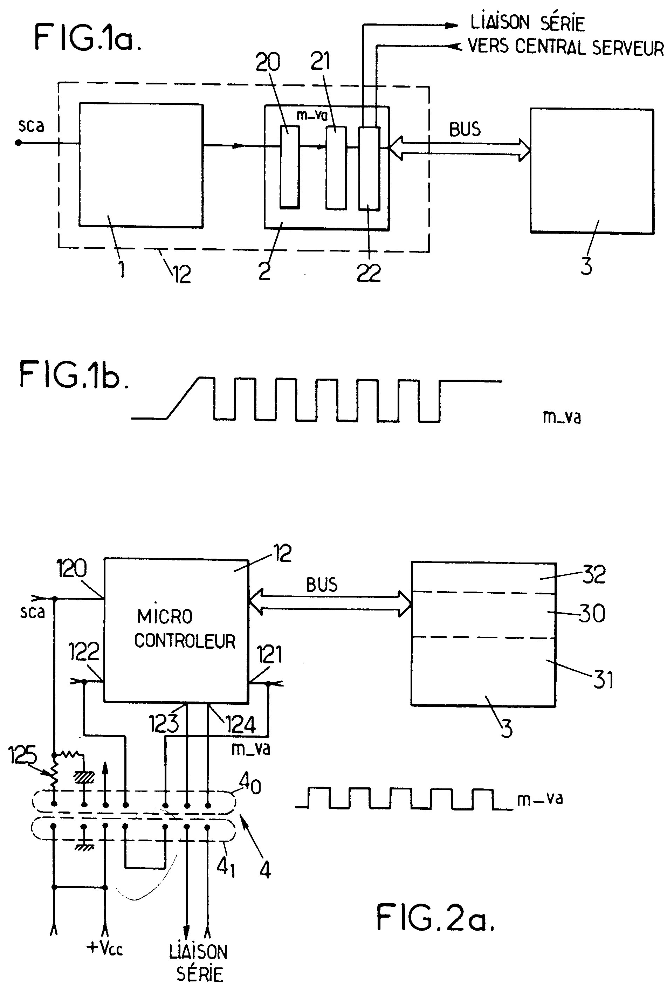

Une description plus détaillée du système de téléchargement de données de programme sur un site ou dispositif comportant un calculateur de gestion de processus, ce calculateur de gestion de processus permettant bien entendu d'assurer le pilotage du processus de fonctionnement du dispositif précité, sera maintenant donnée en liaison avec les figures 1a et 1b, puis avec les figures suivantes.

Dans l'ensemble des figures précitées, les mêmes références représentent les mêmes éléments.

Ainsi qu'on l'a représenté sur la figure 1a, le système de téléchargement de données de programme sur un site ou un dispositif de réception de ces données, comportant un calculateur de gestion de processus du fonctionnement de ce dispositif, ce téléchargement étant effectué à partir d'un central serveur, comprend un circuit 1 de réception d'un signal analogique externe de commande d'amorçage du processus de téléchargement, ce signal étant noté sca sur la figure précitée. Le système comprend également un circuit 2 de validation du processus de téléchargement sur réception du signal analogique externe de commande d'amorçage du processus de téléchargement et un circuit de mémorisation 3 des données de programme, suite à la validation du processus de téléchargement.

D'une manière générale, on indique que le circuit de réception du signal externe 1 et le circuit 2 de validation du processus de téléchargement peuvent avantageusement être constitués par le calculateur de gestion de processus, lequel par commodité porte la référence 12 sur la figure 1a, et est représenté en traits mixtes sur cette figure. Dans ce cas, le calculateur de gestion 12 est relié au circuit de mémorisation 3 par l'intermédiaire d'une liaison par BUS et le calculateur de gestion 12 est alors piloté par un programme de conduite d'un protocole de téléchargement des données de programme, ainsi qu'il sera explicité ci-après. D'une manière générale, on indique que le calculateur de gestion 12 peut être constitué par un micro-contrôleur de processus comportant des ports d'entrée et des ports de sortie de signaux analogiques et au moins un port de transmission-réception de type liaison série.

Dans le mode de réalisation de la figure 1a, le circuit de réception 1 du signal analogique externe comprend un système comparateur à seuil relié à l'un des ports d'entrée du signal analogique du micro-contrôleur 12, ce système comparateur à seuil permettant, par comparaison de l'amplitude du signal analogique externe à la valeur de seuil, de discriminer la valeur logique du signal analogique exerne, ce qui permet bien entendu de commander l'amorçage du processus de téléchargement en fonction de la valeur logique du signal analogique externe.

Le chargement des données de programme est ensuite effectué par l'intermédiaire du port de type liaison série.

De manière classique, on indique que le micro-contrôleur 12 peut comporter avantageusement directement interconnecté au port d'entrée recevant le signal analogique externe de commande, sca, un convertisseur analogique numérique permettant d'effectuer une conversion correspondante, et suite à cette conversion, un module de programme de comparaison des valeurs numériques converties à la valeur de seuil, ce qui permet de discriminer la valeur logique du signal externe pour ensuite déclencher la commande d'amorçage du processus de téléchargement. Ces fonctions ne seront pas décrites en détail car elles correspondent à des fonctions normalement connues de l'état de la technique.

Selon une autre caractéristique avantageuse du système de téléchargement objet de la présente invention tel que décrit en figure 1a, le circuit de validation 2 du processus de téléchargement peut comprendre : un circuit d'émission conditionnelle d'un message de validation du processus de téléchargement, noté 20, et un circuit 21 de réception et de reconnaissance du message de validation du processus de téléchargement, les circuits 20 et 21 de réception et de reconnaissance du message de validation étant interconnectés.

Sur la figure 1a, on a représenté en outre directement connecté au circuit 21 de réception et de reconnaissance du message de validation du processus de téléchargement, ce message étant noté m-va, un module 22 d'acquisition et de mémorisation des données de programme transmises notamment par la liaison série, ces données étant ensuite transférées par le module 22 dans le circuit de mémorisation 3 par la liaison de type BUS. Ce module 22 ne sera pas décrit en détail, car, dans un mode de réalisation préférentiel qui sera décrit ci-après, l'ensemble des circuits 20 des dispositifs d'émission conditionnelle d'un message de validation du processus de téléchargement, 21 de réception et de reconnaissance du message de validation du processus de téléchargement, et 22 peuvent être réalisés bien entendu au moyen du micro-contrôleur 12 précité.

Sur la figure 1b, on a représenté une forme de message de validation du processus de téléchargement, ce message étant noté m-va, et pouvant consister en une suite d'un nombre déterminé d'impulsions à une fréquence d'horloge par exemple, ces impulsions constituant d'ailleurs une suite de valeurs binaires 1 ou 0 selon un nombre déterminé d'impulsions.

Un mode de réalisation plus particulièrement avantageux d'un système de téléchargement objet de la présente invention sera maintenant décrit en liaison avec la figure 2a.

Dans le mode de réalisation précité, on comprend que le micro-contrôleur 12 peut être réalisé par un micro-contrôleur huit-bits, ce micro-contrôleur pouvant par exemple être constitué par un micro-contrôleur commercialisé par la société TEXAS INSTRUMENTS sous la référence TMS 374 C 003.

Dans le mode de réalisation représenté en figure 2a, on indique que l'entrée du signal analogique externe de commande d'amorçage sca du processus de téléchargement porte la référence 120, les entrées de la liaison de type série portent les références 123, 124, le port de sortie analogique du micro-contrôleur permettant d'engendrer le message de validation du téléchargement m-va portant la référence 121, et le port analogique d'entrée recevant ce même message de validation de téléchargement m-va porte la référence 122.

Ainsi qu'on l'a en outre représenté sur la figure 2a précitée, on indique que les ports analogiques d'entrée, respectivement de sortie 120, 122 et 121 sont des ports normalement utilisés par le micro-contrôleur de gestion de processus, en particulier lorsque ce micro-contrôleur de gestion de processus est utilisé comme calculateur de gestion d'un véhicule automobile, les ports analogiques d'entrée-sortie précédemment mentionnés sont des ports utilisés pour le réglage ou le contrôle du processus de fonctionnement du véhicule ou du groupe propulseur de celui-ci. En particulier, on indique, d'une manière particulièrement avantageuse, que les ports analogiques d'entrée-sortie précités sont des ports fonctionnellement indépendants pour le dispositif ou pour le véhicule dont le processus est géré par le micro-contrôleur correspondant. Ainsi, on indique que le port analogique d'entrée 120 est connecté par exemple, dans le cas d'un véhicule automobile, sur l'entrée de mesure de température du fluide de refroidissement de celui-ci. On indique alors que le signal analogique de commande d'amorçage est relié en parallèle sur cette entrée et est délivré par exemple par un diviseur potentiométrique à partir d'une borne d'entrée d'un connecteur, ce connecteur portant la référence 4 sur la figure 2a. Le diviseur potentiométrique porte la référence 125.

On indique en outre que l'interconnexion entre le port analogique d'entrée 122, et le port analogique de sortie 121 du micro-contrôleur 12 peut être réalisée par l'intermédiaire du même connecteur 4, les ports analogiques d'entrée respectivement de sortie 122 et 121 étant constitués par exemple en ce qui concerne l'entrée analogique 122 par l'entrée de sélection climatiseur du véhicule, alors que la sortie analogique 121 peut correspondre à la sortie analogique de la commande d'injection pour un véhicule à injection contrôlée, par exemple.

Dans ces conditions, ainsi que représenté en figure 2a, l'interconnexion entre le port analogique 122 et le port analogique de sortie 121 peut être réalisée avantageusement par l'intermédiaire du connecteur 4, celui-ci comportant sur les fils de connexion interconnectés en parallèle sur l'entrée analogique 122, respectivement la sortie analogique 121, un fil de pontage assurant la liaison entre 2 broches du connecteur 4 précité. Bien entendu, on indique également que le connecteur 4 précité comporte des broches interconnectées à l'entrée et à la sortie de la liaison série du micro-contrôleur 12, ce dernier étant bien entendu connecté au central serveur par l'intermédiaire d'une liaison série correspondante. Enfin, on indique en ce qui concerne la partie du connecteur 4₁ connectée au central serveur que 2 broches de celui-ci sont reliées à une tension d'alimentation + Vcc par exemple. La partie du connecteur 4₀ interconnectée au micro-contrôleur 12 comprend alors également une broche assurant l'alimentation de la tension d'alimentation + Vcc, et une broche destinée à recevoir une tension d'alimentation + Vcc, laquelle après division par le diviseur potentiométrique 125 permet d'engendrer le signal de commande d'amorçage du signal analogique externe de commande d'amorçage sca précédemment mentionné.

En fonctionnement, on comprend bien sûr que les parties complémentaires 4₀ et 4₁ du connecteur étant mises en position de connexion, la liaison série est ainsi réalisée entre le micro-contrôleur 12 et le central serveur, le court-circuit entre le port analogique de sortie 121 et le port analogique d'entrée 122 est réalisé par le pontage de la partie 4₁ du connecteur, l'alimentation du micro-contrôleur 12 et de ses circuits auxiliaires, tels que les circuits de mémorisation 3, est réalisée par la tension d'alimentation + Vcc, l'interconnexion de la broche reliée au diviseur potentiométrique 125 est également réalisée et les connexion de masse sont également réalisées.

En ce qui concerne le circuit de mémorisation 3, on indique d'une manière pratique que ceux-ci peuvent comporter avantageusement une mémoire vive de type RAM 30, ainsi qu'une mémoire de type EEPROM 31, et une mémoire morte ROM 32.

En l'absence d'interconnexion des parties complémentaires 4₀, 4₁ du connecteur 4, on indique ainsi que le micro-controleur 12 de gestion est apte à assumer la gestion du processus de fonctionnement du dispositif ou du véhicule correspondant. Lorsqu'au contraire, les parties complémentaires 4₀ et 4₁ sont interconnectées pour réaliser l'interconnexion et bien entendu le téléchargement des données de programme, on indique bien sûr que dans ce cas-là, le dispositif est normalement mis à l'arrêt en dehors de toute alimentation électrique, dans le cas d'un véhicule automobile, la clé de contact étant sur la position de repos par exemple. La mise sous tension de la tension d'alimentation + Vcc par exemple par une commande au niveau du centre serveur par exemple permet également d'assurer l'alimentation du diviseur potentiométrique 125 et ainsi de créer et engendrer le signal analogique externe de commande sca, lequel est appliqué sur l'entrée 120 du micro-contrôleur. Ce signal ayant par exemple une amplitude supérieure à une valeur de l'ordre de 3,2 volts est alors reconnu, suite à la discrimination réalisée par le système comparateur à seuil et la valeur logique du signal de commande d'amorçage, sca, est alors portée à une valeur 1 par exemple permettant de commander l'amorçage du processus de téléchargement.

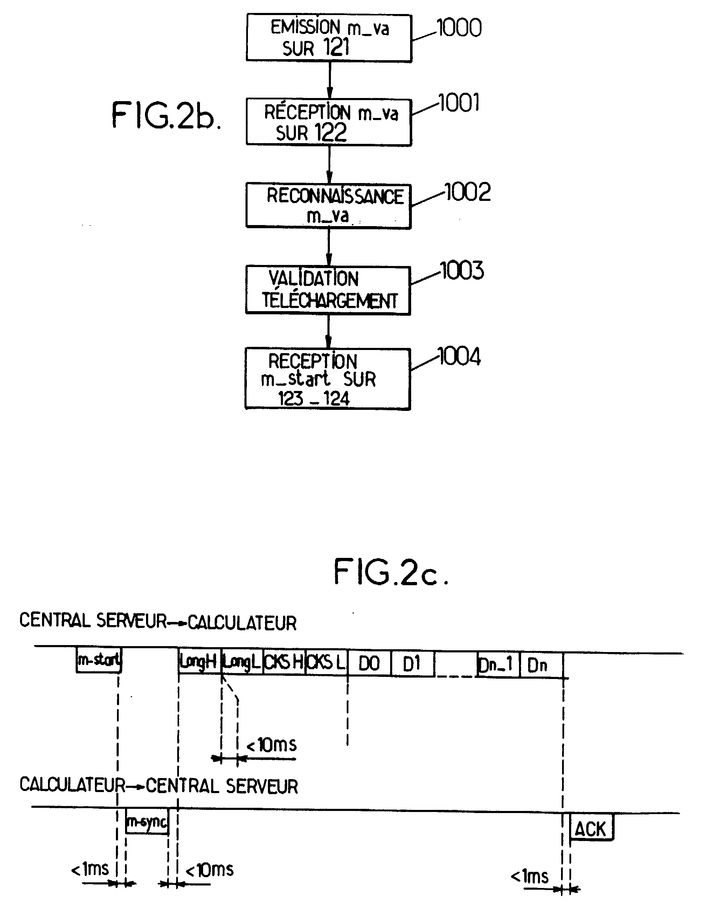

Cette commande d'amorçage ayant été effectuée, le micro-contrôleur 12 poursuit le processus de téléchargement selon le processus tel que représenté en figure 2b.

En une étape 1000, le micro-contrôleur permet d'engendrer sur le port de sortie analogique 121 le message m-va tel que représenté en figure 2a, suite d'impulsions de valeurs binaires, par exemple, 0 ou 1.

Une étape 1001 permet alors d'assurer la réception sur le port analogique d'entrée 122 du message m-va de validation d'amorçage, ce qui permet de vérifier par exemple que l'interconnexion des parties complémentaires des parties 4₀ et 4₁ du connecteur 4 est convenablement réalisée.

L'étape 1001 précitée est suivie d'une étape 1002 de reconnaissance du message de validation du processus de téléchargement, cette étape de reconnaissance pouvant consister par exemple en une vérification progressive de l'amplitude de chaque impulsion engendrée et reçue constitutive du message de validation.

D'une manière générale, on indique que l'émission du message de validation m-va est effectuée par un programme d'émission de ce message, lequel est émis sur le port de sortie analogique 121 du micro-contrôleur 12 et que la réception et la reconnaissance de ce message sont effectuées au moyen d'un programme de comparaison du message de validation m-va reçu sur le port d'entrée analogique 122 du micro-contrôleur 12 à un message de référence prédéterminé ou à un critère de comparaison.

Lorsque l'ensemble de ces impulsions a été reconnu, c'est-à-dire que le message m-va de validation a été reconnu dans son ensemble, l'étape 1002 est alors suivie d'une étape 1003 de validation du téléchargement, l'opération de téléchargement proprement dite pouvant commencer selon un protocole de téléchargement spécifique, lequel sera décrit ci-après dans la description en liaison avec la figure 2c.

Le central serveur ayant procédé à l'émission du signal analogique externe de commande d'amorçage, ainsi que précédemment décrit, cette émission pouvant bien entendu être laissée à l'initiative d'un opérateur chargé d'assurer le téléchargement, le protocole de téléchargement comprend au moins successivement, ainsi que représenté sur la figure 2c précitée, une étape d'émission à partir du site central serveur vers le site de réception, c'est-à-dire vers le micro-contrôleur 12, d'un message de commande de démarrage de téléchargement, ce message étant noté m-start correspondant à l'étape 1004 de la figure 2b, et au chronogramme de la figure 2c. Bien entendu, l'émission de l'ensemble des messages précités à partir de l'émission du message m-start est effectuée sur la liaison série à partir du site central serveur vers le micro-contrôleur 12 ou réciproquement.

Suite à l'émission du message de commande de démarrage précité, le protocole de téléchargement comprend une étape d'émission à partir du site de réception, c'est-à-dire du micro-contrôleur 12 vers le site central serveur, d'un message de synchronisation, lequel est noté m-sync, ce message assurant la synchronisation de transmission des données de programme sur la liaison série.

Suite à l'étape d'émission précitée du message de synchronisation, est alors prévue une étape de transmission des données de programme proprement dite, du site central serveur vers le site de réception des données de programme, c'est-à-dire vers le micro-contrôleur 12.

De manière classique, on indique que l'étape de transmission des données de programme proprement dite peut comporter, ainsi que représenté sur la figure 2c, une transmission d'un message de gestion de ces données à partir de mots spécifiques, tels que :
- le mot noté LongH contenant le nombre d'octets à charger en mémoire vive 30
- le mot CKSH contenant la somme sur 16 bits non bornée des octets de données de programme proprement dits, ces octets étant notés D0 à Dn.

On indique que le dialogue précité constitutif du protocole de téléchargement peut être géré par un programme correspondant chargé dans la mémoire morte 32.

En ce qui concerne la vitesse de transmission des messages précités constitutifs du protocole de télachargement, on indique que la vitesse de chargement et de transmission des messages précités peut être déterminée à partir du message m-start, celui-ci pouvant consister par exemple en une suite successive de 7 bits à la valeur 0, par exemple.

Dans le cas où le premier octet, c'est-à-dire le message LongH n'est pas reçu avant une durée prédéterminée, soit 10 ms par exemple, le système repasse en attente du message m-start.

Au contraire, lorsque le premier octet précité est reçu en temps voulu, le téléchargement est exécuté et la trame des données est alors chargée en mémoire vive 30 à partir d'une adresse déterminée.

On indique que d'une manière générale, le temps de transmission entre octets ne dépasse pas la durée déterminée précitée, temps au-delà duquel le système repasse en attente du message m-start.

Une fois que la trame a été chargée, dans le cas où les paramètres de longueur et de contrôle CKLS ont été vérifiés, un message d'acquittement de transmission est émis, ce message étant noté Ack sur la figure 2c. Ce message indique que l'opération s'est correctement déroulée et que le contrôle a été passé au programme téléchargé par un saut à une adresse déterminée, à l'adresse de mémorisation en mémoire vive précédemment mentionnée.

Dans le cas où le contrôle est mauvais, le système repasse en attente du message m-start.

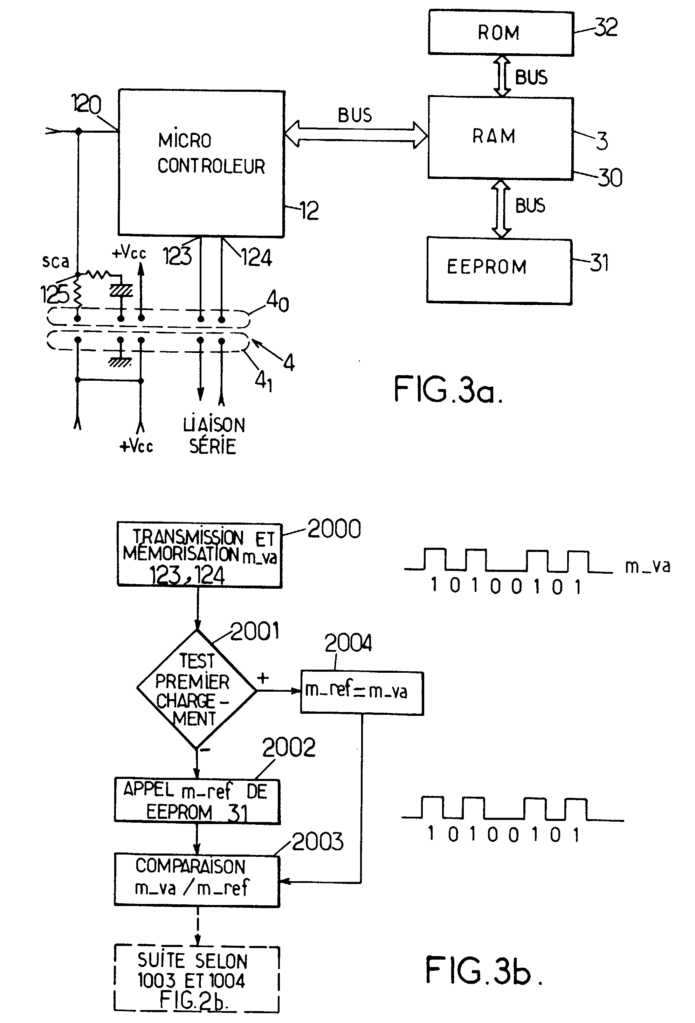

Une description d'un mode de réalisation particulier non limitatif dans lequel l'interconnexion entre port analogique de sortie et port analogique d'entrée permettant le transit du message de validation m-va n'est plus nécessaire sera maintenant donnée en liaison avec les figures 3a et 3b.

Sur la figure 3a, on a représenté le mode de réalisation de la figure 3b, dans lequel l'interconnexion précitée a été supprimée. Dans un tel cas, le message de validation, M-va, peut bien entendu être constitué de manière semblable par une suite de valeurs binaires constituant un code de validation. Le message de validation du processus de téléchargement peut par exemple consister en un ou plusieurs mots codés sur 8 bits successifs par exemple.

Dans un tel cas, ainsi que représenté en figure 3b, suite à l'étape de réception du signal de commande d'amorçage sca, une étape de transmission et de mémorisation du message de validation m-va, étape 2000, est prévue, ce signal étant transmis sur la liaison série par les ports de celle-ci, 123, 124 au micro-contrôleur. On indique bien entendu que dans un tel cas, le message de validation du processus de téléchargement, m-va, peut alors être représentatif du type de véhicule par exemple d'un code d'accès constructeur ou le cas échéant concessionnaire agréé habilité, ainsi que d'autres paramètres relatifs aux variantes dans la série du type.

L'étape 2000 précitée est alors suivie d'un test 2001 de premier chargement des données de programme, par l'intermédiaire d'une variable de préexistence ou d'absence de préexistence d'un programme correspondant chargé dans les moyens de mémorisation 30 et en particulier dans la mémoire EEPROM 31. Sur réponse négative au test 2001 précité, c'est-à-dire lorsqu'il ne s'agit pas d'un premier chargement mais que des données de programme préexistent, l'étape de test 2001 précitée est suivie d'une étape 2002 d'appel d'un message de référence, noté m-ref mémorisé dans l'EEPROM 31. L'étape 2002 précitée peut alors être suivie d'une étape 2003 de comparaison entre le message de validation de téléchargement m-va et le message de référence m-ref. Une telle comparaison s'effectue bit à bit par l'intermédiaire du micro-contrôleur 12. Sur comparaison positive à l'étape 2003 entre les deux messages précités, le processus peut être poursuivi selon les étapes 1003 et 1004 de la figure 2b.

Au contraire, sur réponse positive au test 2001, le chargement consistant en un premier chargement, il n'existe pas de données de programme dans les circuits de mémorisation, 31 notamment, et dans un tel cas, un message de référence est constitué par identification de ce message au message de validation de téléchargement m-va en une étape 2004. Cette étape 2004 est alors suivie par un saut à l'étape de comparaison 2003 précitée pour une poursuite du processus de téléchargement selon les mêmes étapes 1003 et 1004 de la figure 2b.

On comprend ainsi que le message de validation de téléchargement m-va permet non seulement de vérifier la bonne interconnexion des parties complémentaires 4₀ et 4₁ du connecteur 4, un message d'acquitement supplémentaire pouvant d'ailleurs être transmis du micro-contrôleur 12 vers le site central serveur sur la liaison série précitée, ce message d'acquitement pouvant simplement correspondre au premier octet du message de validation m-va, lequel, après duplication, peut être renvoyé sur la liaison série pour constituer le message d'acquitement adressé au site central serveur.

On comprend également que le message de validation de téléchargement m-va permet en outre une fonction supplémentaire, celle de l'identification de la signature des données de programme, ce qui permet bien entendu d'assurer un contrôle de sécurité de ces données et d'éviter notamment, dans le cas de véhicules automobiles munis de groupes propulseurs à turbo compresseur, d'interdire la modification non autorisée des paramètres d'optimisation du groupe propulseur précité, et de modifier illicitement celui-ci.

On a ainsi décrit un système de téléchargement de données de programme sur un site ou dispositif de réception de ces données comportant un calculateur de gestion de processus particulièrement performant dans la mesure où une même configuration matérielle de ce système permet des applications diverses et, pour un type d'application, une évolution de celle-ci en l'absence de toute modification matérielle nécessaire. En outre, les conditions de contrôle d'une telle évolution et la sécurité correspondante des dispositifs ou véhicules automobiles munis d'un tel système sont particulièrement renforcés, l'accès aux opérations de téléchargement des données de programme correspondantes pouvant notamment être réservé uniquement à des personnes habilitées.

## Revendications

1. Système de téléchargement de données de programme, à partir d'un central serveur, sur un site ou dispositif de réception de ces données comportant un calculateur de gestion de processus (12), système constitué par un micro-contrôleur comportant des ports d'entrée (120, 122) et des ports de sortie (121) de signaux analogiques et au moins un port de transmission-réception (123, 124) de type liaison série, caractérisé en ce que ce système comprend des moyens (1) de réception d'un signal analogique externe (sca) de commande d'amorçage du processus de téléchargement, des moyens (2) de validation du processus de téléchargement, sur réception dudit signal analogique externe (sca), formés par ledit calculateur de gestion de processus (12) piloté par un programme de conduite d'un protocole de téléchargement et un module (3) de mémorisation des données de programme, suite à la validation du processus de téléchargement, et en ce que lesdits moyens (2) de validation du processus de téléchargement comprennent :
- un moyen (20) d'émission conditionnelle d'un message de validation (m-va) du processus de téléchargement, et
- un moyen (21) de réception et de reconnaissance du message de validation (m-va) du processus de téléchargement, lesdits moyens (20) d'émission et moyens (21) de réception dudit message de validation (m-va) étant interconnectés par l'intermédiaire d'un connecteur relié au central serveur, ceci permettant de vérifier que le micro-contrôleur est bien connecté au central serveur.

2. Système selon la revendication 1, tel que lesdits moyens (1) de réception dudit signal analogique externe (sca) comprennent un moyen comparateur à seuil, relié à l'un desdits ports d'entrée du signal analogique dudit micro-contrôleur (12), ledit moyen comparateur à seuil permettant par comparaison de l'amplitude dudit signal externe (sca) à ladite valeur de seuil de discriminer la valeur logique dudit signal externe (sca), ce qui permet de commander l'amorçage du processus de téléchargement, en fonction de la valeur logique dudit signal analogique externe (sca), le chargement des données de programme étant effectué par l'intermédiaire dudit port de type liaison série (123, 124).

3. Système selon la revendication 1, tel que ledit message de validation (m-va) du processus de téléchargement est formé par une suite de valeurs binaires constituant un code de validation.

4. Système selon l'une des revendications 1 à 3, tel que ledit moyen (20) d'émission est constitué par un programme d'émission d'un message de validation (m-va), ledit message de validation (m-va) étant émis sur un port de sortie analogique (121) dudit microcontrôleur (12), et en ce que ledit moyen (21) de réception et de reconnaissance est constitué par un programme de comparaison dudit message de validation (m-va) reçu sur un port d'entrée analogique (122) dudit micro-contrôleur (12) à un message de référence prédéterminé, ledit port analogique d'entrée (122) et ledit port analogique de sortie (121) dudit micro-contrôleur étant reliés éléctriquement.

5. Système selon l'une des revendications 1 à 4 précédentes, tel que ledit protocole de téléchargement comprend au moins successivement suite à l'étape de réception dudit signal analogique externe (sca) de commande d'amorçage dudit processus de téléchargement,
- une étape d'émission, à partir du site central serveur vers le site de réception, d'un message de commande de démarrage de téléchargement (m-start),
- une étape d'émission, à partir du site de réception des données de programme vers ledit site central serveur, d'un message de synchronisation de transmission des données de programme (m-sync),
- une étape de transmission desdites données de programme du site central serveur vers ledit site de réception de ces données de programme, et
- une étape de réponse par émission d'un message d'acquittement de transmission (ACK) émis du site de réception des données de programme vers ledit site central serveur.

6. Système selon l'une des revendications précédentes, tel que lesdits moyens (3) de mémorisation desdites données de programme comportent au moins une mémoire morte reprogrammable électriquement (31), ce qui permet, pour une configuration matérielle donnée dudit système de téléchargement, de mémoriser des données de programme relatives à des véhicules automobiles de caractéristiques différentes.

## Patentansprüche

1. System für die Femladung von Programmdaten, die von einem zentralen Server kommen, an einer Datenempfangsstelle oder einer Datenempfangsvorrichtung mit einem Prozessverwaltungsrechner (12), wobei das System aus einem Mikro-Kontrollgerät besteht, das Eingänge (120, 122) und Ausgänge (121) für analoge Signale und mindestens einen Übertragungs/Empfangsport (123, 124) mit seriellem Anschluss aufweist, **dadurch gekennzeichnet**, dass dieses System Mittel (1) für den Empfang eines extemen analogen Steuersignals (sca) zum Auslösen des Fernladeprozesses und Mittel (2) zur Durchführung des Femladeprozesses nach Empfang des genannten analogen externen Signals (sca) aufweist, die durch den genannten Prozessverwaltungsrechner (12) gebildet werden, der von einem Protokollführungsprogramm des Femladeprozesses und einem Modul (3) zur Speicherung der Programmdaten nach der Durchführung des Fernladeprozesses gesteuert wird und dass die genannten Mittel (2) zur Durchführung des Femladeprozesses folgendes aufweisen:
- Mittel (20) zum Senden, die in Abhängigkeit von einer Durchführungsbestätigung (m-va) des Femladeprozesses arbeiten und
- Mittel (21) zum Empfangen und Erkennen der Durchführungsbestätigung (m-va) des Fernladeprozesses, wobei die Mittel (20) zum Senden und die Mittel (21) zum Empfangen der Durchführungsbestätigung (m-va) mittels einer beim zentralen Server geschalteten Verbindung miteinander verbunden sind, wodurch möglich ist, zu überprüfen, ob das Mikro-Kontrollgerät richtig mit dem zentralen Server verbunden ist.

2. System nach Anspruch 1, bei dem die Mittel (1) zum Empfang des externen analogen Signals (sca) ein Mittel zum Vergleichen des Schwellenwertes aufweisen, das mit einem der genannten Eingänge für das analoge Signal des Mikro-Kontrollgeräts (12) verbunden ist, wobei das Mittel zum Vergleichen des Schwellenwerts durch einen Vergleich der Amplitude des externen Signals (sca) mit dem genannten Schwellenwert es ermöglicht, den logischen Wert des genannten externen Signals (sca) zu unterscheiden, was es wiederum ermöglicht, die Auslösung des Femladeprozesses zu veranlassen, wobei das Laden der Programmdaten in Abhängigkeit des logischen Werts des externen analogen Signals (sca) über den genannten Port mit seriellem Anschluss (123, 124) durchgeführt wird.

3. System nach Anspruch 1, wobei die genannte Durchführungsbestätigung (m-va) des Femladeprozesses durch eine Folge von binären Werten gebildet wird, die einen Code für die Durchführung darstellen.

4. System nach einem der Ansprüche 1 bis 3, bei dem die Mittel (20) zum Senden von einem Programm gebildet werden, das eine Durchführungsbestätigung (m-va) sendet, wobei diese Durchführungsbestätigung an einen analogen Ausgang (121) des genannten Mikro-Kontrollgeräts (12) gesendet wird, und bei dem die Mittel (21) zum Empfangen und Erkennen von einem Programm gebildet werden, das die Durchführungsbestätigung (m-va), die von einem analogen Eingang (122) des Mikro-Kontrollgeräts (12) empfangen wird, mit einer vorbestimmten Referenzmitteilung vergleicht, wobei der genannte analoge Eingang (122) und der genannte analoge Ausgang (121) des Mikro-Kontrollgeräts elektrisch verbunden sind.

5. System nach einem der vorhergehenden Ansprüche 1 bis 4, bei dem das genannte Fernladeprotokoll im Anschluss an das Stadium des Empfangs des externen analogen Signals (sca) zur Auslösung des Femladeprozesses mindestens folgendes aufweist:
- ein Stadium des Sendens einer Mitteilung vom Ort des zentralen Servers zum Empfangsort zur Steuerung des Starts der Fernladung (m-start),
- ein Stadium des Sendens einer Mitteilung vom Ort des Empfangs der Programmdaten zum genannten Ort des zentralen Servers bezüglich der Synchronisation der Übertragung der Programmdaten (m-sync),
- ein Stadium der Übertragung der genannten Programmdaten vom Ort des zentralen Servers zum genannten Ort des Empfangs dieser Programmdaten, und
- ein Stadium der Antwort durch Übersendung einer Nachricht zum Quittieren der Übertragung (ACK) vom Ort des Empfangs der Programmdaten zum Ort des zentralen Servers.

6. System nach einem der vorhergehenden Ansprüche, bei dem die genannten Mittel (3) zum Speichem der genannten Programmdaten mindestens einen unbelegten elektrisch neu programmierbaren Speicher (31) aufweisen, mit dem es möglich ist, bei einer gegebenen materiellen Konfiguration des genannten Fernladesystems die Programmdaten für die verschiedenen Eigenschaften der Fahrzeuge zu speichem.

## Claims

1. A system for downloading program data, from a central server, onto a reception site or device for these data, comprising a process controller (12), the system being made up from a micro - controller comprising input ports (120,122) and output ports (121) for analogue signals and at least one serial transmission - reception port (123,124), characterised in that the system comprises means (1) for the reception of an external analogue command signal (sca) for the start of the downloading process, means (2) for enabling the downloading process, on the reception of the said external analogue signal (sca), created by the said process controller (12) controlled by a guiding program of a downloading protocol and a module (3) for putting to memory the program data, following the enabling of the downloading process, and in that the said enabling means (2) of the downloading program comprise:
- means (20) for the conditional emission of an enabling message (m-va) for the downloading process, and
- means (21) for the reception and recognition of the enabling message (m-va) for the downloading process, the said emitting means (20) and receiving means (21) for the said enabling message (m-va) being inter connected through a connector device linked to the central server, this allowing for the verification that the micro - controller is properly connected to the central server.

2. A system according to Claim 1, such that the said means (1) for the reception of the said external analogue signal (sca) comprises threshold comparator means, linked to one of the said input ports for the analogue signal of the said micro - controller (12), the said threshold comparator means allowing through a comparison of the amplitude of the said external signal (sca) to the said threshold value, to distinguish the logic value of the said external signal (sca), which allows the start of the down loading process to be controlled, as a function of the logic value of the said external analogue signal (sca), the loading of the program data being carried out though the said serial port (123,124).

3. A system according to Claim 1, such that the said enabling message (m-va) of the downloading process is formed by a succession of binary values constituting an enabling code.

4. A system according to one of the Claims 1 to 3, such that the said emitting means (20) is made up by a program for emitting an enabling message (m-va), the said enabling message (m-va) being emitted at an analogue output port (121) of the said micro - controller (12), and in that the said reception and recognition means (21) is made up of a comparison program of the said enabling message (m-va) received at an analogue input port (122) of the said micro - controller (12) with a predetermined reference message, the said analogue input port (122) and the said analogue output port (121) of the said micro - controller being electrically linked.

5. A system according to one of the preceding Claims 1 to 4, such that the said downloading protocol comprises at least successively following the step of receiving the external analogue command signal (sca) for the start of the said downloading process,
- a step of emitting, from the central server site to a reception site, a command message for the start up of the downloading (m-start),
- a step of emitting, from the reception site of the program data to the said central server site, a synchronisation message for the transmission of the program data (m-sync),
- a step of transmitting the said program data from the central server site to the said reception site of the program data, and
- a response step by emitting a transmission receipt message (ACK) emitted from the program data reception site to the said central server cite.

6. A system according to one of the preceding claims, such that the said means (3) for putting to memory the said program data comprise at least one electronically programmable read only memory (31), which allows, for a given material configuration of the said downloading system, to put to memory program data relating to automobile vehicles with difference characteristics.
